# EUROPÄISCHE PATENTSCHRIFT

(11) **EP 3 139 752 B1**
(45) Veröffentlichungstag und Bekanntmachung des Hinweises auf die Patenterteilung: **11.07.2018**
(21) Anmeldenummer: 15720090.8
(22) Anmeldetag: 05.05.2015
(51) Int. Cl.: A22C 17/00, B26D 7/01, B26D 7/06

(54) **GREIFER MIT EINEM ULTRASCHALLSENSOR**
GRIPPER COMPRISING AN ULTRASONIC SENSOR
DISPOSITIF DE PRÉHENSION ÉQUIPÉ D'UN CAPTEUR À ULTRASONS

(30) Priorität: 08.05.2014 DE 102014208670
(43) Veröffentlichungstag der Anmeldung: 15.03.2017
(73) Patentinhaber: GEA Food Solutions Germany GmbH, 35216 Biedenkopf-Wallau (DE)
(72) Erfinder: FISCHL, Bernd, 87452 Altusried OT Krugzell (DE)
(74) Vertreter: Kutzenberger Wolff & Partner
(86) Internationale Anmeldenummer: PCT/EP2015/059810
(87) Internationale Veröffentlichungsnummer: WO 2015/169788

(56) Entgegenhaltungen:
- WO-A1-2010/011237
- WO-A1-2014/049170
- DE-A1- 3 010 732
- DE-A1-102005 010 185

## Beschreibung

Die vorliegende Erfindung betrifft eine Vorrichtung zum Aufschneiden von einem oder mehreren Lebensmittelprodukte(n), insbesondere Wurst, Schinken und/oder Käse, wobei für jedes Lebensmittelprodukt jeweils eine Spur vorgesehen ist, entlang derer es in Richtung eines sich bewegenden Messers transportiert wird, das von dem vorderen Ende des Lebensmittelprodukts Lebensmittelscheiben abtrennt, wobei die Vorrichtung einen Greifer aufweist, der die Rückseite des Lebensmittelprodukts vorm oder beim Aufschneiden ergreift. Des Weiteren betrifft die vorliegende Erfindung ein Verfahren zum Aufschneiden eines Lebensmittelprodukts.

Derartige Vorrichtungen sind aus dem Stand der Technik hinlänglich bekannt. Des Weiteren ist beispielsweise aus der WO2010/011237 A1, der DE 30 10 732 A1, der WO 2004/106 020 A1, der DE 10 2009 023 749 A1 bekannt, den Greifer mit einem Sensor auszustatten. Die dort beschriebenen Sensoren sind jedoch vergleichsweise aufwändig in ihrer Herstellung, in ihrem Einbau und/oder in ihrem Betrieb.

Es war deshalb die Aufgabe der vorliegenden Erfindung, eine Vorrichtung oder ein Verfahren zur Verfügung zu stellen, das die Nachteile des Standes der Technik nicht aufweist.

Gelöst wird die Aufgabe mit einer Vorrichtung zum Aufschneiden von einem oder mehreren Lebensmittelprodukte(n), insbesondere Wurst, Schinken und/oder Käse, wobei für jedes Lebensmittelprodukt jeweils eine Spur vorgesehen ist, entlang derer es in Richtung eines sich bewegenden Messers transportiert wird, das von dem vorderen Ende des Lebensmittelprodukts Lebensmittelscheiben abtrennt, wobei die Vorrichtung einen Greifer aufweist, der die Rückseite des Lebensmittelprodukts vorm oder beim Aufschneiden ergreift, und der Greifer einen Ultraschallsensor aufweist.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft eine Vorrichtung zum Aufschneiden von Lebensmittelprodukten, wie beispielsweise Wurst, Schinken und/oder Käse. Derartige Aufschneidevorrichtungen werden von dem Fachmann auch als "Slicer" oder "Hochleistungsslicer" bezeichnet. Diese Aufschneidevorrichtungen weisen ein sich bewegendes, insbesondere drehendes, Schneidmesser auf, das von dem vorderen Ende eines Lebensmittelproduktes Lebensmittelscheiben abschneidet. Dabei dreht sich das Schneidmesser mit bis zu 1.000 Umdrehungen pro Minute und mehr und/oder wirkt mit einer Schneidkante zusammen, die beispielsweise am vorderen Ende einer Produktauflage vorgesehen ist und die gemeinsam mit dem Messer die Schneidebene definiert, in der Lebensmittelscheiben von dem Lebensmittelprodukt abgetrennt werden. Zwischen dem Schneidmesser und der Schneidkante befindet sich ein Schneidspalt, der so klein wie möglich sein sollte, um ein "Abhacken" von Teilen des Lebensmittelproduktes zu verhindern. Der Schneidspalt muss aber so groß sein, dass das Messer die Schneidkante möglichst nicht berührt. Beim Aufschneiden wird das Lebensmittelprodukt kontinuierlich oder intermittierend in Richtung des Schneidmessers transportiert. Nachdem eine Scheibe von dem jeweiligen Lebensmittelprodukt abgeschnitten worden ist, gelangt das Schneidmesser außer Eingriff mit dem jeweiligen Lebensmittelprodukt, um dann erneut in das Lebensmittelprodukt einzudringen und die nächste Lebensmittelscheibe abzuschneiden. Der Vorschub des jeweiligen Lebensmittelproduktes zwischen zwei Schnitten bestimmt die Dicke der jeweils abgeschnittenen Lebensmittelscheibe. Die abgeschnittenen Lebensmittelscheiben fallen beispielsweise auf einen Ablagetisch, auf dem sie zu Portionen zusammengefasst werden. Sobald eine Portion fertiggestellt ist, wird sie aus dem Abwurfbereich des Messers entfernt und der Aufschnitt einer neuen Portion kann beginnen. Vor dem Beginn oder während des Aufschneidens des Lebensmittelproduktes wird dessen hinteres Ende jeweils von einem Greifer ergriffen, beispielsweise um das Lebensmittelprodukt insbesondere gegen Ende des Aufschneidens zu stabilisieren und/oder um das verbleibende Reststück zu entsorgen von einem Greifer ergriffen. Jeder Greifer weist einen Antrieb auf, mit dem er, beispielsweise aus einer Anfangsstellung, insbesondere parallel zu der Transportrichtung des Lebensmittelprodukts während des Aufschneidens, in Richtung der Rückseite des Produktes bewegbar ist, um mit dieser in Eingriff gebracht zu werden. Vorzugsweise weist der Greifer ein Mittel, beispielsweise Zangen und/oder ein Unterdruckmittel auf, um einen Form- und/oder Kraftschluss zwischen dem Greifer und dem Lebensmittelprodukt reversibel zu erzeugen. Nachdem das Aufschneiden des jeweiligen Lebensmittelproduktes beendet ist, wird die Verbindung zwischen dem Greifer und dem verbleibenden Endstück gelöst und das Endstück fällt beispielsweise in einen Abwurfkanal, insbesondere nachdem es von dem Greifer aus der Schneidebene zurückgezogen worden ist. Danach fährt der Greifer in der Regel in eine Warteposition, aus der dann wieder in Richtung der Rückseite des Lebensmittelprodukts bewegt wird, um ein neues Lebensmittelprodukt zu ergriffen. Vorzugsweise ist die Aufschneidevorrichtung mehrspurig vorgesehen, d. h. dass mehrere Lebensmittelprodukte von einem Messer, insbesondere zumindest teilweise gleichzeitig oder zumindest teilweise sequentiell, aufgeschnitten werden. Dafür weist die Vorrichtung für jedes Lebensmittelprodukt eine eigene Spur auf, entlang derer es in Richtung des Messers transportiert wird. In jeder Spur ist ein Greifer vorgesehen, dessen Antrieb vorzugsweise jeweils individuell regelbar ist. Die Greifer können an einer beweglichen Zentraleinheit vorgesehen sein, zu der sie dann jeweils beweglich vorgesehen sind.

Erfindungsgemäß ist der Greifer mit einem Ultraaschallsensor versehen. Insbesondere ist der Ultraschallsensor in dem Bereich einer Anlagefläche vorgesehen, an der das hintere Ende des Lebensmittelprodukts anliegt, nachdem der Greifer es ergriffen hat. Der Ultraschallsensor generiert ein Signal, das insbesondere an die Steuerung/Regelung der erfindungsgemäßen Vorrichtung gesendet wird, das unter anderem den Antrieb, der den Greifer in Richtung der Rückseite des Lebensmittelprodukts bewegt, regelt/steuert. Beispielsweise wird der zurückzulegende Weg, die Geschwindigkeit und/oder die Beschleunigung des Greifers geregelt. Vorzugsweise erfolgt die Generierung eines Signals des Ultraschallsensors mehrmals während sich der Greifer in Richtung des hinteren Endes des Lebensmittelproduktes bewegt. Vorzugsweise kann die Frequenz und/oder Amplitude des Ultraschallsensors, beispielsweise von der Regelung/Steuerung verändert werden, beispielsweise lebensmittelproduktabhängig verändert werden, um ein möglichst genaues Abstandssignal zu erhalten.

Vorzugsweise wird die Bewegung des Greifers so geregelt, dass das Lebensmittelprodukt beim Berühren mit dem Greifer und/oder beim Ergreifen nicht oder nur vergleichsweise gering komprimiert wird. Diese bevorzugte Ausführungsform der vorliegenden Erfindung hat den Vorteil, das die Form und/oder die Lage des Lebensmittelproduktes beim Kontakt mit dem Greifer nicht oder nur vergleichsweise geringfügig verändert wird, so dass sich entsprechende Daten, die vorm und/oder beim Aufschneiden ermittelt werden, nicht oder nur geringfügig verändern.

Vorzugsweise ermittelt der Ultraschallsensor den Abstand zwischen dem Greifer und der Rückseite des Lebensmittelprodukts. Dies kann vor und/oder während der Bewegung des Greifers in Richtung der Rückseite des Lebensmittelproduktes geschehen. Vorzugsweise erfolgt die Bestimmung des Abstands des Greifers zu der Rückseite des Lebensmittels mehrfach, insbesondere in regelmäßigen zeitlichen und/oder örtlichen Intervallen, insbesondere bis zu dem Zeitpunkt zu dem der Greifer das Lebensmittelprodukt berührt oder nahezu berührt. Nach jeder Messung sendet der Ultraschallsensor ein Signal an eine Regelung/Steuerung der erfindungsgemäßen Vorrichtung, so dass diese zumindest in regelmäßigen zeitlichen und/oder örtlichen Abständen, vorzugsweise ständig, weiß wie groß der Abstand zwischen dem Greifer und der Rückseite des Lebensmittelproduktes ist.

Das von dem Ultraschallsensor erzeugte Signal wird vorzugsweise dazu eingesetzt den Antrieb, der den Greifer in Richtung der Rückseite des Lebensmittelproduktes bewegt, insbesondere dessen Geschwindigkeit und/oder dessen Weg, zu regeln oder zu steuern. Vorzugsweise erfolgt die Regelung so, dass der Greifer das Lebensmittelprodukt nicht oder nur sehr geringfügig in seiner Form und/oder Lage verändert. Dies kann beispielsweise dadurch erfolgen, dass die Geschwindigkeit des Greifers beim und/oder vorm Berühren mit dem Lebensmittelprodukte gering ist und/oder dass der Greifer abrupt abgestoppt wird, sobald ein vorgegebener Abstand zwischen Greifer und der Rückseite des Lebensmittelprodukts unterschritten wird.

Weiterhin bevorzugt weist der Greifer einen weiteren Antrieb auf, der den Form- und/oder Kraftschluss zwischen dem Greifer und dem Lebensmittelprodukt reversibel bewerkstelligt bzw. wieder aufhebt. Dieser Antrieb betätigt beispielsweise die Zange des Greifers, die beim Ergreifen in das Lebensmittelprodukt eindringt und/oder der Antrieb ist beispielswiese ein Mittel das einen Unterdruck im Bereich der Anlagefläche des Greifers erzeugt, der das hintere Ende des Lebensmittelprodukt an die Anlagefläche des Greifers zieht und/oder daran festhält. Vorzugsweise wird dieser Antrieb ebenfalls anhand des Signals des Ultraschallsensors gesteuert oder geregelt, so dass der Form- und/oder Kraftschluss zu einem ganz bestimmten Zeitpunkt oder in einem gewissen Abstand zwischen Greifer und Rückseite des Lebensmittelprodukts und/oder auch so erfolgt, dass der Greifer das Lebensmittelprodukt sicher ergreift aber möglichst geringfügig beim Ergreifen verformt.

Für den Fall, dass die Rückseite des Lebensmittelprodukts nicht eben sein sollte, ermittelt der Ultraschallsensor vorzugsweise den Abstand zwischen dem dem Greifer am nächsten liegenden Abschnitt der Rückseite des Lebensmittelproduktes und der Anlagefläche des Greifers. Alternativ oder zusätzlich wird mit dem Ultraschallsensor ein Profil der Rückseite des Lebensmittelproduktes erstellt und anhand dieses Profils der Abstand zwischen Lebensmittelprodukt und Greifer ermittelt.

Vorzugsweise weist die Vorrichtung mehrere Spuren auf, in der jeweils ein Lebensmittelprodukt insbesondere unabhängig von den anderen Spuren aufschneidbar ist, wobei jede Spur einen Greifer aufweist, der jeweils, vorzugsweise unabhängig von den anderen Greifern, mit der Rückseite des jeweiligen Lebensmittelprodukts in Eingriff bringbar ist. Der Aufschnitt in den Spuren kann gleichzeitig und/oder sequentiell erfolgen. Es können gleichzeitig dieselben oder unterschiedliche Lebensmittelprodukte aufgeschnitten werden. Die Spuren können gleichzeitig und/oder nacheinander beladen werden. Vorzugsweise weist jede Spur einen Abwurfschacht auf, in den das jeweilige Reststück abgeworfen werden kann. Das Lösen der Reststücke kann gleichzeitig oder sequentiell erfolgen.

Vorzugsweise kann anhand des Signals des Ultraschallsensors ermittelt werden, ob in der jeweiligen Spur ein Lebensmittelprodukt vorhanden ist. Weiterhin bevorzugt kann mit dem Ultraschallsensor die Länge des jeweiligen Produkts ermittelt werden, insbesondere wenn dieses beispielsweise an einem Referenzpunkt, beispielsweise einem Schieber anliegt.

Gemäß einer bevorzugten Ausführungsform der vorliegenden Erfindung weist der Greifer einen Auswerfer für das Reststück des Lebensmittelprodukts auf und der Ultraschallsensor überprüft, ob das Reststück tatsächlich ausgeworfen ist, insbesondere nachdem der Auswerfer betätigt worden ist. Diese bevorzugte Ausführungsform hat den Vorteil, dass sichergestellt ist, dass der Greifer nicht mit einem Reststück blockiert ist, wenn er ein neues Lebensmittelprodukt ergreifen soll.

Ein weiterer Gegenstand der vorliegenden Erfindung ist ein Verfahren zum Aufschneiden eines Lebensmittelproduktes mit der erfindungsgemäßen Vorrichtung, bei dem der Ultraschallsensor den Abstand zwischen dem Greifer und der Rückseite des Lebensmittelprodukts ermittelt und eine Regelung den Antrieb des Greifers, der den Greifer in Richtung der Rückseite des Lebensmittelproduktes bewegt, in Abhängigkeit vom dem Signal des Ultraschallsensors regelt oder steuert.

Die zu diesem Gegenstand der vorliegenden Erfindung gemachten Ausführungen gelten für die anderen Gegenstände der vorliegenden Erfindung gleichermaßen und umgekehrt.

Vorzugsweise wird der Weg, den der Greifer zurücklegen soll und/oder seine Geschwindigkeit geregelt oder gesteuert. Vorzugsweise werden während der Bewegung des Greifers weitere Signale des Ultraschallsensors von der Regelung verarbeitet und zu einem Soll/Ist-Vergleich eingesetzt, um festzustellen, ob der Greifer den gewünschten Weg zurückgelegt hat und/oder die gewünschte Geschwindigkeit hat. Vorzugsweise wird die Geschwindigkeit anhand des Soll-/ist-Vergleichs korrigiert, sofern nötig. Vorzugsweise wird die Geschwindigkeit des Greifers reduziert, sobald er sich in der Nähe der Rückseite des Lebensmittelproduktes befindet. Das Ergreifen kann vor dem Beginn des Aufschneidens des jeweiligen Lebensmittelprodukts oder nachdem dessen Aufschnitt bereits begonnen hat, erfolgen. Im letzteren Fall wird vorzugsweise die Bewegung der Rückseite des Lebensmittelproduktes bei der Regelung/Steuerung der Bewegung des Greifers mitberücksichtigt. Dasselbe gilt vorzugsweise für die Aktivierung der Form- und/oder Kraftschlussmittel des Greifers.

Gemäß einem weiteren erfindungsgemäßen oder bevorzugten Gegenstand der vorliegenden Erfindung wird anhand des Signals des Ultraschallsensors ermittelt, ob sich ein Lebensmittelprodukt in der jeweiligen Spur befindet.

Die zu diesem Gegenstand der vorliegenden Erfindung gemachten Ausführungen gelten für die anderen Gegenstände der vorliegenden Erfindung gleichermaßen und umgekehrt.

Kann der Ultraschallsensor kein Lebensmittelprodukt in der jeweiligen Spur ermitteln, setzt die Steuerung/Regelung der Vorrichtung vorzugsweise ein entsprechendes Signal ab und/oder es wird ein Vorgang eingeleitet, um die Vorrichtung anzuhalten und/oder die entsprechende Spur zu beladen.

Gemäß noch einem weiteren bevorzugten oder erfindungsgemäßen Gegenstand der vorliegenden Erfindung wird das Reststück nach dem Aufschneiden des Lebensmittelprodukts von dem Greifer gelöst, insbesondere abgestoßen, wobei anhand des Signals des Ultraschallsensors ermittelt wird, ob das Lösen/Abstoßen tatsächlich erfolgt ist.

Die zu diesem Gegenstand der vorliegenden Erfindung gemachten Ausführungen gelten für die anderen Gegenstände der vorliegenden Erfindung gleichermaßen und umgekehrt.

Gemäß noch einem weiteren erfindungsgemäßen oder bevorzugten Gegenstand der vorliegenden Erfindung wird die Position des Greifers nach dem Ergreifen des Produktes verwendet um das Aufschneiden des Lebensmittelprodukts zu regeln.

Die zu diesem Gegenstand der vorliegenden Erfindung gemachten Ausführungen gelten für die anderen Gegenstände der vorliegenden Erfindung gleichermaßen und umgekehrt.

Anhand der Position des Greifers weiß die Vorrichtung beispielsweise wie weit der Aufschneidevorgang fortgeschritten ist und kann diesen entsprechend steuern oder regeln. Die Position des Greifers kann auch für das Aufschneiden von gewichtsgenauen Portionen eingesetzt werden.

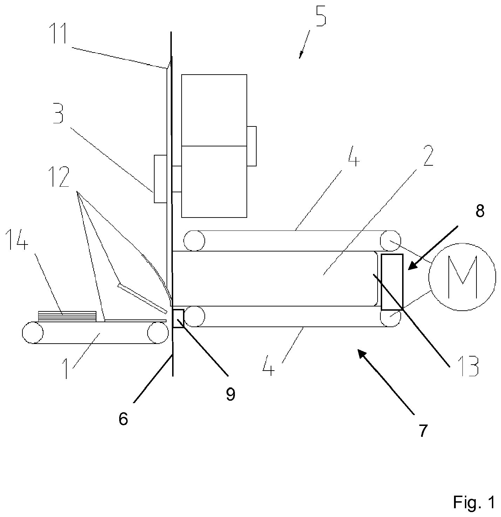

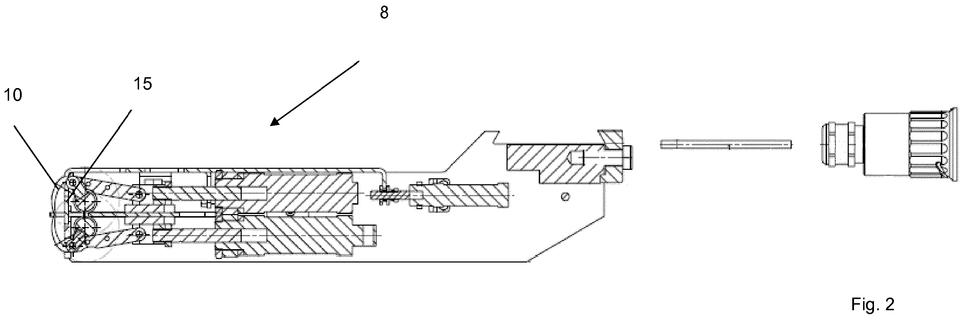

Im Folgenden wird die Erfindung anhand der Figuren 1 und 2 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Aufschneidevorrichtung.
- **Figur 2**: zeigt den Greifer der Aufschneidevorrichtung.

**Figur 1** zeigt eine erfindungsgemäße Aufschneidevorrichtung 5. Die Aufschneidevorrichtung 5 weist ein Schneidmesser 11 auf, das ein Lebensmittelprodukt 2 in Lebensmittelscheiben 12 schneidet. Dazu wird jedes Lebensmittelprodukt 2 mit einem Fördermittel 4, hier zwei Förderbändern 4, kontinuierlich oder intermittierend in Richtung der Schneidebene 6 des Messers 11 transportiert. Das untere Förderband 4 ist gleichzeitig eine Produktauflage. Das Schneidmesser 11 ist an einer sich drehenden Messeraufnahme 3 befestigt und wirkt mit einer Schneidkante 9 schneidend zusammen, die beispielsweise am vorderen Ende einer Produktauflage 4 vorgesehen ist und die gemeinsam mit dem Schneidmesser die Schneidebene 6 definiert. Zwischen dem Messer 11 und der Schneidkante 9 ist ein sogenannter Schneidspalt vorhanden, der möglichst klein sein sollte, jedoch so groß sein muss, dass das Messer die Schneidkante nicht berührt. Dieser Schneidspalt muss regelmäßig eingestellt werden. Dies kann durch eine Bewegung des Messers und/oder der Schneidkante erfolgen. Außerdem muss die Schneidkante parallel zu dem Messer ausgerichtet sein. Nach dem Abschneiden fallen die Lebensmittelscheiben in der Regel auf einen Ablagetisch 1, der mit Transportmitteln, beispielsweise einem Transportband oder Transportriemen, versehen ist, auf dem sie zu jeweils einer Portion 14, hier einem Stapel, konfiguriert werden. Die fertiggestellten Portionen 14 werden sodann aus dem Schneidmesserbereich abtransportiert und danach verpackt. Unter dem Transportmittel des Ablagetischs kann ein Unterlegeblech vorgesehen sein, das insbesondere eine zu große Längung des Transportmittels verhindert. Die Scheibenstärke ergibt sich aus der Vorschubstrecke des Lebensmittelproduktes zwischen zwei Schnitten. Bei konstanter Messerdrehgeschwindigkeit erfolgt die Regelung der Scheibenstärke über die Vorschubgeschwindigkeit des Lebensmittelproduktes. Die Aufschneidevorrichtung weist pro Vorschubtrasse einen Greifer 8 auf, der das rückwärtige Ende 13 des Lebensmittelproduktes 2 vor oder während des Aufschneidens ergreift und dieses während des Aufschneidens, insbesondere gegen Ende des Aufschneidens, stabilisiert und das Endstück, das nicht aufgeschnitten werden kann, entsorgt. Jeder Greifer ist vorzugsweise an einem Greiferwagen (nicht dargestellt) vorgesehen, der die Greifer, insbesondere parallel zur Vorschubrichtung des Lebensmittelprodukts, vor- und zurückbewegt. Der Greifer 8 weist vorzugsweise eine Anlagefläche für die Rückseite des Lebensmittelprodukts und/oder Zangen 10 auf, die beweglich vorgesehen sind, um reversibel in das Lebensmittelprodukt einzudringen und dadurch einen Form- und/oder Kraftschluss zwischen dem Greifer und dem Lebensmittelprodukt zu erzeugen.

**Figur 2** zeigt die Zangen 10 in ihrer geschlossenen d.h. greifenden Stellung. Der Greifer wird vor oder nach dem Beginn des Aufschneidens mit der Rückseite, d.h. der dem vorderen Ende gegenüberliegenden Ende, des Lebensmittelproduktes in Eingriff gebracht. Dafür wird der Greifer beispielsweise aus einer Position, in der er sich beim Beladen der Vorrichtung befindet von einem Antrieb in Richtung der Rückseite des Lebensmittelproduktes bewegt. Erfindungsgemäß weist der Greifer nun einen Ultraschallsensor auf, der sich vorzugsweise im Bereich der Anlagefläche der Rückseite des Lebensmittelproduktes befindet und anhand dessen Signal der Abstand zwischen dem Greifer, insbesondere dem Ultraschallsensor und der Rückseite des Lebensmittelprodukts ermittelt wird. Diese Abstandsmessung kann einmal oder mehrmals erfolgen. Die zeitlichen und/oder örtlichen Abstände, an denen eine Messung erfolgt kann äquidistant oder unterschiedlich sein. Beispielsweise kann sich die Frequenz der Messungen erhöhen, wenn der Greifer in die Nähe der Rückseite des Lebensmittelprodukts gelangt. Anhand der oder den Messung(en) wird die Bewegung des Greifers in Richtung der Rückseite des Lebensmittelprodukts gesteuert und/oder geregelt. Die Regelung erfolgt dabei insbesondere so, dass das Lebensmittelprodukt beim Kontakt mit dem Greifer möglichst geringfügig, vorzugsweise gar nicht in seine Form verändert, d.h. beispielsweise komprimiert, und/oder in seiner Lage, beispielsweise in Richtung des Schneidmessers gedrückt, wird. Der Ultraschallsensor kann auch dafür eingesetzt werden um zu überprüfen ob sich ein Lebensmittelprodukt in der jeweiligen Spur befindet und/oder ob nach dem Ende des Aufschneidens das verbleibende Reststück erfolgreich abgeworfen wurde.

Vorzugsweise ist die Aufschneidevorrichtung mehrspurig vorgesehen, d. h. dass mehrere Lebensmittelprodukte 2 von einem Messer, insbesondere zumindest zeitweise gleichzeitig oder zumindest zeitweise sequentiell, aufgeschnitten werden. Dafür weist die Vorrichtung für jedes Lebensmittelprodukt eine eigene Spur 7 auf, entlang derer es in Richtung des Messers 11 transportiert wird. In jeder Spur ist ein Greifer vorgesehen, der vorzugsweise zumindest teilweise unabhängig von den anderen Greifern bewegbar ist. Vorzugsweise weist jeder Greifer einen Ultraschallsensor auf, der mit der Steuerung und/oder Regelung verbunden ist. Vorzugsweise können die Ultraschallsensoren unabhängig voneinander betrieben werden, beispielsweise bezüglich der Frequenz, mit der Signale an die Steuerung/Regelung gesendet werden und/oder der Frequenz und/oder Amplitude der ausgesandten Ultraschallwellen.

### Bezugszeichenliste:

- 1: Ablagetisch
- 2: Lebensmittelprodukt
- 3: Messeraufnahme
- 4: Auflagefläche, Transportmittel einer Spur 7
- 5: Aufschneidevorrichtung
- 6: Schneidebene
- 7: Spur
- 8: Greifer
- 9: Schneidleiste, Schneidkante
- 10: Greifzangen
- 11: Messer, Schneidmesser, Kreismesser, Sichelmesser
- 12: Lebensmittelscheiben
- 13: Rückseite des Lebensmittelproduktes
- 14: Portion, Lebensmittelportion
- 15: Anlagefläche für die Rückseite des Lebensmittelprodukts 2

## Patentansprüche

1. Vorrichtung (5) zum Aufschneiden von einem oder mehreren Lebensmittelprodukte(n) (2), insbesondere Wurst, Schinken und/oder Käse, wobei für jedes Lebensmittelprodukt (2) jeweils eine Spur (7) vorgesehen ist, entlang derer es in Richtung eines sich bewegenden Messers (11) transportiert wird, das von dem vorderen Ende des Lebensmittelprodukts Lebensmittelscheiben abtrennt, wobei die Vorrichtung einen Greifer (8) aufweist, der die Rückseite (13) des Lebensmittelprodukts (2) vorm oder beim Aufschneiden ergreift, **dadurch gekennzeichnet, dass** der Greifer einen Ultraschallsensor aufweist.

2. Vorrichtung (5) nach Anspruch 1, **dadurch gekennzeichnet, dass** der Ultraschallsensor den Abstand zwischen dem Greifer (8) und der Rückseite (13) des Lebensmittelprodukts (2) ermittelt.

3. Vorrichtung (5) nach Anspruch 1 oder 2, **dadurch gekennzeichnet, dass** die Vorrichtung eine Regelung aufweist, die ein Signal von dem Ultraschallsensor empfängt und in Abhängigkeit von diesem Signal den Antrieb des Greifers regelt.

4. Vorrichtung nach einem der voranstehenden Ansprüche, **dadurch gekennzeichnet, dass** sie mehrere Spuren aufweist, in der jeweils ein Lebensmittelprodukt (2) insbesondere unabhängig von den anderen Spuren aufschneidbar ist, wobei jede Spur einen Greifer (8) aufweist, der jeweils, vorzugsweise unabhängig von den anderen Greifern, mit der Rückseite (13) eines Lebensmittelprodukts (2) in Eingriff ist.

5. Vorrichtung nach einem der voranstehenden Ansprüche, **dadurch gekennzeichnet, dass** der Ultraschallsensor ermittelt, ob der jeweilige Greifer (8) in Kontakt mit einem Lebensmittelprodukt ist.

6. Vorrichtung nach einem der voranstehenden Ansprüche, **dadurch gekennzeichnet, dass** der Greifer einen Auswerfer für das Reststück des Lebensmittelprodukts aufweist und dass der Ultraschallsensor überprüft, ob das Reststück ausgeworfen ist.

7. Verfahren zum Aufschneiden eines Lebensmittelproduktes (2) mit einer Vorrichtung nach einem der voranstehenden Ansprüche, **dadurch gekennzeichnet, dass** der Ultraschallsensor den Abstand zwischen dem Greifer (8) und der Rückseite (13) des Lebensmittelprodukts (2) ermittelt und eine Regelung den Antrieb des Greifers in Abhängigkeit vom dem Signal des Ultraschallsensors regelt.

8. Verfahren nach Anspruch 7 oder dem Oberbegriff von Patentanspruch 7, **dadurch gekennzeichnet, dass** anhand des Signals des Ultraschallsensors ermittelt wird, ob sich ein Lebensmittelprodukt (2) in der jeweiligen Spur befindet.

9. Verfahren nach einem der Ansprüche 7 oder 8 oder dem Oberbegriff von Patentanspruch 7, **dadurch gekennzeichnet, dass** das Reststück nach dem Aufschneiden des Lebensmittelprodukts von dem Greifer gelöst wird, wobei anhand des Signals des Ultraschallsensors ermittelt wird, ob das Lösen erfolgt ist.

10. Verfahren nach einem der voranstehenden Ansprüche oder dem Oberbegriff von Patentanspruch 7, **dadurch gekennzeichnet, dass** die Position des Greifers nach dem Ergreifen des Produktes verwendet wird um das Aufschneiden des Lebensmittelprodukts zu regeln.

## Claims

1. Device (5) for slicing one or more food product(s) (2), in particular sausage, ham and/or cheese, wherein for each food product (2) is respectively provided a track (7) along which it is transported in the direction of a moving blade (11) which cuts off food slices from the front end of the food product, wherein the device has a gripper (8) which grips the back (13) of the food product (2) before or during the slicing, **characterized in that** the gripper has an ultrasonic sensor.

2. Device (5) according to Claim 1, **characterized in that** the ultrasonic sensor determines the distance between the gripper (8) and the back (13) of the food product (2) .

3. Device (5) according to Claim 1 or 2, **characterized in that** the device has a regulating system, which receives a signal from the ultrasonic sensor and, in dependence on this signal, regulates the drive of the gripper.

4. Device according to one of the preceding claims, **characterized in that** it has a plurality of tracks, in each of which, in particular independently of the other tracks, a food product (2) is sliceable, wherein each track has a gripper (8), which is respectively engaged with the back (13) of a food product (2), preferably independently of the other grippers.

5. Device according to one of the preceding claims, **characterized in that** the ultrasonic sensor determines whether the respective gripper (8) is in contact with a food product.

6. Device according to one of the preceding claims, **characterized in that** the gripper has an ejector for the remnant of the food product, and **in that** the ultrasonic sensor checks whether the remnant is ejected.

7. Method for slicing a food product (2) with a device according to one of the preceding claims, **characterized in that** the ultrasonic sensor determines the distance between the gripper (8) and the back (13) of the food product (2) and a regulating system regulates the drive of the gripper in dependence on the signal of the ultrasonic sensor.

8. Method according to claim 7 or the preamble of Patent Claim 7, **characterized in that**, on the basis of the signal of the ultrasonic sensor, it is determined whether a food product (2) is present in the respective track.

9. Method according to one of Claims 7 and 8 or the preamble of Patent Claim 7, **characterized in that** the remnant, after the slicing of the food product, is released from the gripper, wherein, on the basis of the signal of the ultrasonic sensor, it is determined whether the release has taken place.

10. Method according to one of the preceding claims or the preamble of Patent Claim 7, **characterized in that** the position of the gripper after the gripping of the product is used to regulate the slicing of the food product.

## Revendications

1. Dispositif (5) pour découper un ou plusieurs produits alimentaires (2), en particulier des saucisses, du jambon et/ou du fromage, une piste (7) étant prévue pour chaque produit alimentaire (2), le long de laquelle il est transporté dans la direction d'un couteau en mouvement (11) qui sépare les tranches d'aliments de l'extrémité avant du produit alimentaire, le dispositif présentant un organe de préhension (8) qui saisit le côté arrière (13) du produit alimentaire (2) avant ou pendant la découpe, **caractérisé en ce que** l'organe de préhension présente un capteur à ultrasons.

2. Dispositif (5) selon la revendication 1, **caractérisé en ce que** le capteur à ultrasons détermine la distance entre l'organe de préhension (8) et le côté arrière (13) du produit alimentaire (2).

3. Dispositif (5) selon la revendication 1 ou 2, **caractérisé en ce que** le dispositif présente un réglage qui reçoit un signal provenant du capteur à ultrasons et qui règle l'entraînement de l'organe de préhension en fonction de ce signal.

4. Dispositif selon l'une quelconque des revendications précédentes, **caractérisé en ce qu'**il présente plusieurs pistes, un produit alimentaire (2) pouvant être découpé dans l'une d'entre elles notamment indépendamment des autres pistes, chaque piste présentant un organe de préhension (8) qui, de préférence indépendamment des autres organes de préhension, est à chaque fois en prise avec le côté arrière (13) d'un produit alimentaire (2).

5. Dispositif selon l'une quelconque des revendications précédentes, **caractérisé en ce que** le capteur à ultrasons détermine si l'organe de préhension respectif (8) est en contact avec un produit alimentaire.

6. Dispositif selon l'une quelconque des revendications précédentes, **caractérisé en ce que** l'organe de préhension présente un éjecteur pour le morceau restant de produit alimentaire et **en ce que** le capteur à ultrasons vérifie que le morceau restant a été éjecté.

7. Procédé de découpe d'un produit alimentaire (2) avec un dispositif selon l'une quelconque des revendications précédentes, **caractérisé en ce que** le capteur à ultrasons détermine la distance entre l'organe de préhension (8) et le côté arrière (13) du produit alimentaire (2) et un réglage règle l'entraînement de l'organe de préhension en fonction du signal du capteur à ultrasons.

8. Procédé selon la revendication 7 ou selon le préambule de la revendication 7, **caractérisé en ce que** l'on détermine à l'aide du signal du capteur à ultrasons si un produit alimentaire (2) se trouve dans la piste respective.

9. Procédé selon l'une quelconque des revendications 7 ou 8, ou selon le préambule de la revendication 7, **caractérisé en ce que** le morceau restant, après la découpe du produit alimentaire, est détaché de l'organe de préhension, et l'on détermine à l'aide du signal du capteur à ultrasons s'il a bien été détaché.

10. Procédé selon l'une quelconque des revendications précédentes ou selon le préambule de la revendication 7, **caractérisé en ce que** l'on utilise la position de l'organe de préhension après qu'il a saisi le produit pour régler la découpe du produit alimentaire.
